# EUROPEAN PATENT SPECIFICATION

(11) **EP 4 540 329 B1**
(45) Date of publication and mention of the grant of the patent: **15.04.2026**
(21) Application number: 23729737.9
(22) Date of filing: 30.05.2023
(51) Int. Cl.: C09D 11/101, C09D 7/41, C09D 4/00, C09D 5/00

(54) **NEAR-INFRARED LIGHT CURABLE AQUEOUS COATING COMPOSITION**
NAHINFRAROTLICHTHÄRTBARE WÄSSRIGE BESCHICHTUNGSZUSAMMENSETZUNG
COMPOSITION DE REVÊTEMENT AQUEUSE DURCISSABLE À LA LUMIÈRE PROCHE INFRAROUGE

(30) Priority: 15.06.2022 EP 22179081
(43) Date of publication of application: 23.04.2025
(73) Proprietor: Actega GmbH, 46483 Wesel (DE)
(72) Inventor: STREHMEL, Bernd, 47798 Krefeld (DE); APPELHOFF, Lukas, 47809 Krefeld (DE); OKS, Elina, 46483 Wesel (DE); BRÖMME, Thomas, 13595 Berlin (DE); HORNEMANN, Nicolas, 46483 Wesel (DE)
(74) Representative: Altana IP Department
(86) International application number: PCT/EP2023/064406
(87) International publication number: WO 2023/241904

(56) References cited:
- EP-A1- 2 098 367
- US-A1- 2008 299 488
- US-B1- 7 326 521
- XIN YANGYANG ET AL: "NIR-sensitized cationic frontal polymerization of vinyl ether and epoxy monomers", PROCESS IN ORGANIC COATINGS, ELSEVIER BV, NL, vol. 153, 23 January 2021 (2021-01-23), XP086503791, ISSN: 0300-9440, [retrieved on 20210123], DOI: 10.1016/J.PORGCOAT.2021.106149

## Description

The invention concerns an aqueous coating composition, its use, a process for treating a substrate with the coating composition and an (intermediate) industrial product.

Conventionally, coatings have been formed from solutions of the polymer binders in organic solvents. As the coating cures, the solvents evaporate into the atmosphere. This is economically disadvantageous due to the high costs of these solvents, but more importantly, these solvents also cause pollution of the atmosphere and health hazard to people handling the products. Accordingly, alternatives to conventional solvent-based products are needed. Some efforts have been directed to coatings from polymer dispersions in water. Economically, the use of water is advantageous and, in addition, water does not pollute the atmosphere when it evaporates from the coating. Thus, water-based inks and coatings are a growing market due to the environmental pressure. Traditionally, water-based inks or coatings essentially contain water and polymeric binder.

However, typical aqueous coating compositions comprise not only polymer binder but also reactive (chemical) crosslinker which causes (additional chemical) curing by thermal activation. A disadvantage of these systems, however, is that such thermal curing is normally relatively slow and requires high temperatures (e. g. a special oven has to be used). It restricts therefore also the use of temperature sensitive substrates; that is for example paper or wood.

Likewise known are aqueous coating compositions which cure physically, corresponding to a curing of the coat by filming (by mere evaporation of the water). In systems of this kind, often no crosslinking agents are used. However, for many applications this physical curing has to be assisted by chemical crosslinking in order to provide the required mechanical properties. In many cases it is advantageous to avoid time and energy consuming thermal crosslinking (curing).

Substantially more rapid is the curing of coatings based on radiation-curable aqueous dispersions which are curable by "chemical drying" (crosslinking initiated by radiation) and "physical drying" (evaporation of water). The curing by radiation of an aqueous polymer dispersion is e. g. described in EP 277 29 17 A. Further examples of radiation-curable coatings are disclosed in EP2098367 A1, US7326521 B1 and US2008/299488 A1.

Radiation-cured aqueous coatings are e. g. used as overprint varnishes. The advantages of printing with radiation-curing printing inks and coatings are rapid spontaneous polymerization (the typical crosslinking/curing mechanism) after irradiation with a radiation source and the good printability also on non-absorbent substrates.

For many applications, such as in wood/furniture or plastic coatings, considerable initial physical drying plays a particularly important role after the water has been evaporated and before the radiation cures.

Especially in clear coats and in many printing inks is advantageous to avoid "colored ingredients" in order to provide a sufficient non-visibility (which indicates that it is not visible to naked eye). However, many photo initiator systems used in said radiation-curable aqueous dispersions show an intensive absorption in the visible range so that the applicability of such dispersions is limited accordingly.

In the context of the above, the object underlying the present invention is to provide a radiation-curing aqueous coating system, which meets high demands both in economic/environmental terms and in terms of processability and product quality.

The solution to this object is an aqueous coating composition (T) comprising:
i) a reactive compound (M) containing at least one free radically polymerizable double bond,
ii) a cyanin (C) and
iii) an iodonium salt (O),
wherein at least a partial quantity of the cyanin (C) and of the iodonium salt (O) were dissolved in a contained aqueous phase (A) comprising at least 40 wt.% water.

The aqueous coating according to the present invention has to be deemed as to be environmental and economic attractive because water is the basic ingredient. It is important that no (co-)solvents (especially such which are soluble in water) are necessary. As (co-)solvents should be deemed (per definition) only co-solvent or solvent compounds which do not have a radically polymerizable group. Co-solvent should point out that the relevant solvent has high solubility in water - so that it might be deemed as to be a co-solvent of water (part of the aqueous phase). However, there are also solvents with nearly no solubility in water (in a dispersion not or nearly not part of the aqueous phase). Such solvents and also the mentioned co-solvents (soluble in water) should be both subsumed to (co-)solvents.

Thus, reactive compound (M) species should not be subsumed to (co-)solvents. Such (co-)solvent species generally do not work as binder components but are often volatile components which should be avoided because of regulatory reasons.

However, reactive diluents (substances which reduce the viscosity and become part of the lacquer or coating during its subsequent curing via free radical polymerization) should be subsumed to (M).

The contained reactive compound (M) serves that the aqueous coating is not only physically but also chemically curable. This provides improved mechanical properties of the dried coating.

The used photo-polymerization initiator system provided by the iodonium salt (O) and the cyanin (C) shows an intensive absorption in the near-infrared but only a weak absorption in the visible range. This might be seen as to be a contribution to avoid "colored ingredients" in order to provide a sufficient non-visibility: this opens application possibilities for many clear coat and printing applications.

Said photo-polymerization initiator system works as an efficient free-radical "provider" for the free-radical polymerization of the reactive compound (M) containing at least one free radically polymerizable double bond.

The mere absorption of the near-infrared light on the one hand and the free-radical polymerization (generation of reaction heat) on the other hand (both) provide a considerable amount of heat. Said heat generation during the processing of the coating is important for a rapid physical drying (evaporation of the water) so that the coating might be also used as a printing ink, even in rapid printing processes. Generally, the fast physical drying (even without an additional thermal curing measurement, like an oven treatment) has to be deemed as to be an important economical aspect. Furthermore, in case the coating is provided as an aqueous dispersion the generated heat allows a sufficient film building. Especially because of said intensive physical drying the coating might be applied also on non-absorbent substrates.

According to a preferred embodiment the aqueous coating composition according to the present invention is provided as an aqueous dispersion in which the aqueous phase (A) is the continuous phase which comprises dispersed particles of a non-aqueous phase (B).

The aqueous dispersion might be a secondary dispersion.

According to a special embodiment the dispersion might be provided as a polyurethane dispersion in which a polyurethane polymer resin containing radical polymerizable groups (or corresponding oligomers) is dispersed in water. Typically, such dispersion types contain urethane (meth)acrylates as the component (M).

As already indicated above the aqueous dispersion according to the present invention does not need (co)-solvents (the expression co-solvent should emphasize that it is an another solvent in addition to water). Furthermore, it can be said that (co-)solvents are not only not necessary, but should even be avoided because of the reasons already discussed above. Co-solvents species mixable with water in any proportion (part of the aqueous phase) are often used as a solubilizer (for example butyl glycol), but which are not needed according to the present invention.

According to a preferred embodiment the aqueous phase contains less than 15, preferably less than 5 wt.-%, more preferably no (co-)solvent.

The reduction of the amount of the (co-)solvent (preferably its entire absence) means that the amount of the water in the aqueous phase (A) increases. As already discussed above, a high amount of water is advantageous because of environmental and also economical reasons.

Preferably, the contained aqueous phase comprises 40 - 98, preferably 70 - 90 wt.% water.

Typically, the aqueous phase contains less than 40, preferably less than 25 wt.% of such components which cannot be subsumed to one of the following components: water, a reactive compound (M), cyanin (C) and iodonium salt (O). Per definition species of the reactive compound (M) cannot be deemed as to be solvents or co-solvents (both subsumed to (co-)sovents) as already said above.

The initiator system applied according to the present invention contains iodonium salt (O) and cyanin (C) (likely working as an initiator sensitizer). Normally, it is preferred that the aqueous phase (A) contains a sufficient amount of both components. Thus, a sufficient solubility of both components in water is generally advantageous. A higher amount of said components in the (a) non-aqueous phase of a dispersion is generally not advantageous (might e. g. provide stability problems of the dispersion).

Thus preferably, the aqueous coating composition according to the present invention contains 0.05 - 3.00 wt.%, preferably 0.50 - 2.00 wt.% iodonium salt (O) and 0.005 - 0.500 wt.%, preferably 0.01 - 0.50 wt.% cyanin (C).

Preferably, the molar proportion of (O) to (C) in the aqueous phase (A) is 5 - 70, preferably 30 - 50.

Typically, at least 60 wt.-% of the species of (C) have a structure according to I, II, III and/or IV: 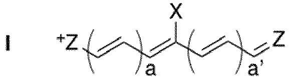 a, a' = 0, 1 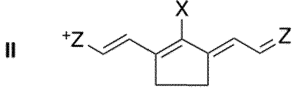 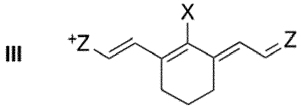 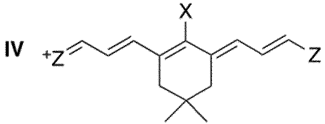
where a and a' are independently of each other 0 or 1,
⁺Z is independently represented by an organic group containing a quarternary ammonium cation,
Z is independently represented by an organic group containing a tertiary amino moiety,
X is independently represented by an organic moiety, Cl or H.

In this connection (referring to the formulas above) the following substitution possibilities are preferred (independently of each other):
**⁺Z/Z:** 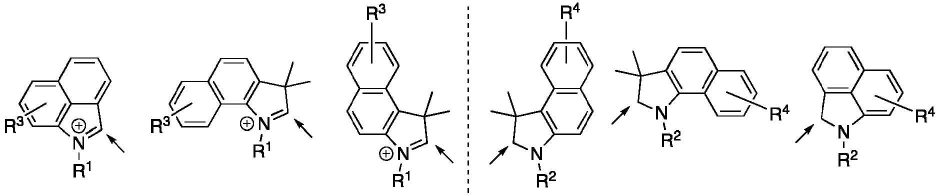
X: 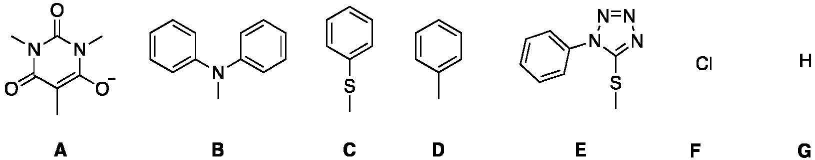
R¹ and R² might be independently represented by a linear or branched alkyl group, -(CH₂-CH₂-O)ₙ-CH₃ (n = 1- 6), -(CH₂-CH₂-CH₂)-SO₃⁻, -(CH₂-CH₂-CH₂-CH₂)-SO₃⁻, -(CH₂-CH₂-CH₂)-N⁺(CH₃)₃;
R³ and R⁴ might be independently represented by H, Cl, Br, O-Alkyl, A-alkyl-Aryl, O-Aryl, S-Alkyl, S-Aryl, -SO₃⁻, -N⁺(CH₃)₃.

(Terminal) Substituents (moieties) not mentioned in the formulas above (only expressed as a terminal binding -) are (represented independently of each other) generally organic groups or hydrogen; preferably hydrocarbon or ether groups.

A single cyanin species to be used is: 5-(6-(2-(1,1-Dimethyl-3-(4-sulfobutyl)-1H-benzo[e]indol-2(3H)-ylidene)ethylidene)-2-(2-(1,1-dimethyl-3-(4-sulfobutyl)-1H-benzo[e]indol-3-ium-2-yl)vinyl)cyclohex-1-en-1-yl)-1,3-dimethyl-2,6-dioxo-1,2,3,6.

The iodonium salts (O) used might be according to the following general formula:

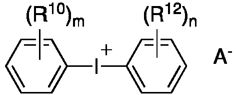

In the above formula R¹⁰ and R¹² each independently represents an organic group (e. g. an alkyl group) having preferably 1 to 6 carbon atoms; m and n is independently represented by 1,2,3,4 or 5. A⁻ represents the corresponding anion.

Typically, at least 60 wt.-% of the cationic species of (O) are of the type alkyl and/or alkyloxy substituted diaryl iodonium. In this connection the following alkyl and/or alkyloxy types are preferred:

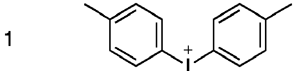

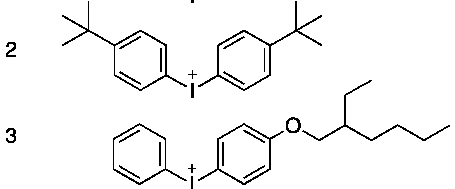

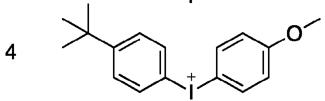

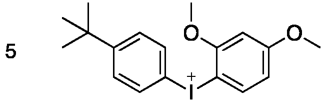

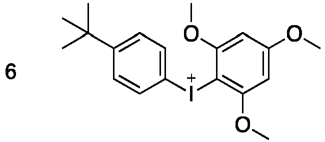

(Terminal) Substituents (moieties) not mentioned in the formulas above (only expressed as a terminal binding -) are (independently represented) generally organic groups or hydrogen; preferably (independently) hydrocarbon groups or ether groups.

Preferred is an aqueous coating composition according to the present invention, in which at least 60 wt.-% of the anionic species of (O) are anions derived from a carboxylic acid, preferably from a hydroxyl carboxylic acid, most preferably provided by lactate.

According to a special embodiment at least 10 wt.-% of the anionic species of (O) are provided by nitrate.

The use of nitrate or carboxylic species provides a better solubility in water.

Preferred salt species of (O) often have a sufficient solubility in water, preferably 30 g/l, more preferably 50 g/l (measured at 20 °C). Normally, at least 60 wt.% of the species of (O) which are contained in the aqueous coating composition (T) have a solubility in water of 0.5 g/l, more preferably 5 g/l (measured at 20 °C).

Suitable species are for example: Alky substituted diphenyl iodonium (as cation), 4-Isopropyl-4'-methyldiphenyl iodonium (as cation), Bis(p-tert-butylphenyl) iodonium lactate (as salt), Bis[4-(*tert*-butly) iodonium lactate (as salt).

However, also a good solubility of the cyanin (C) in water is generally advantageous. Thus, according to a preferred embodiment at least 60 wt.-% of the species of the cyanin (C) and at least 60 wt.-% of the species of the iodonium salt (O) each have a water solubility of at least 30 g/l, preferably of at least 50 g/l, at 20 °C.

According to a preferred embodiment the aqueous coating according to the present invention is curable by near-infrared light electromagnetic radiation.

Typically, the weight proportion of (M) to (C) is 5 - 70, preferably 30 - 50.

Species of the reactive compound (M) contain at least one (free radically polymerizable) double bond so that they might be polymerized (reactive concerning free radical polymerization).

Preferably, at least a partial quantity of the species of the reactive compound (M), preferably at least 70 wt. %, more preferably at least 90 wt.%, are contained in the non-aqueous phase (B). In corresponding dispersions often about 100 wt.% of the species of (M) are contained in the non-aqueous phase.

Normally, at least a partial quantity of the species of the reactive compound (M), preferably at least 60 wt.%, contain at least two free radically polymerizable double bonds. This enables an intensive crosslinking concerning the chemical curing.

Preferably, at least a partial quantity of the species of reactive compound (M), preferably at least 60 wt.%, contain at least one (meth)acryloyl group, preferably at least one acryloyl group. These groups provide a sufficient reactivity in respect to free radical polymerization which is especially important in connection with the use in (rapid) printing applications.

Often (especially if applicated in a rapid printing procedure), at least 80 wt.-% of the species of (M) contain at least one acryloyl group (H₂C=CH-C(=O)-)).

Bifunctional (meth)acrylates might be used. However, in applications which need to have a low viscosity higher amounts of mono (meth)acrylates might be used.

Some reactive components (M) which are commonly used as monomers include:
Monomers comprising one polymerizable group such as: alkyl methacrylate, tetrahydrofufuryl methacrylate, isodecyl methacrylate, 2(2-ethoxyethoxy) ethylacrylate, stearyl acrylate, tetrahydrofurfuryl acrylate, lauryl methacrylate, stearyl methacrylate, lauryl acrylate, 2-phenoxyethyl acrylate, 2-phenoxyethyl methacrylate, glycidyl methacrylate, isodecyl acrylate, isobornyl methacrylate, isooctyl acrylate, tridecyl acrylate, tridecyl methacrylate, caparolactone acrylate, ethoxylated nonyl phenol acrylate, isobornyl acrylate, polypropylene glycol monomethacrylate, hexadecyl acrylate, monomethoxy tripropylene glycol monoacrylate, monomethoxy neopentyl glycol propoxylate monoacrylate, B-carboxyethyl acrylate, and oxyethylated phenol acrylate;

Monomers comprising two polymerizable groups such as: triethylene glycol dimethacrylate, ethylene glycol dimethacrylate, tetraethylene glycol dimethacrylate, polyethylene glycol dimethacrylate, 1,3 butylene glycol diacrylate, 1,4 butanediol diacrylate, 1,4 butanediol dimethacrylate, diethylene glycol diacrylate, diethylene glycol dimethacrylate, 1,6 hexanediol diacrylate, 1,6 hexanediol dimethacrylate, neopentyl glycol diacrylate, neopentyl glycol dimethacrylate, polyethylene glycol dimethacrylate, polyethylene glycol diacrylate, tetraethylene glycol diacrylate, triethylene glycol diacrylate, 1,3 butylene glycol dimethacrylate,dipropylene glycol diacrylate, tripopylene glycol diacrylate, polyethylene glycol diacrylate, ethoxylated bisphenol A dimethacrylate, ethoxylated bisphenol A diacrylate, propoxylated neopentyl glycol diacrylate, ethoxylated neopentyl glycol diacrylate, ethoxylated tripopylene glycol diacrylate, monomethoxy trimethylolpropane ethoxylate diacrylate;

Monomers comprising three polymerizable groups, such as: tris (2-hydroxy ethyl) isocyanurate trimethacrylate, trimethylol propane triacrylate, trimethylol propane trimethacrylate, tris (2-hydroxy ethyl) isocyanurate triacrylate, ethoxylated trimethylol propane triacrylate, propoxylated glycerol triacrylate ditrimethylol propane triacrylate, pentaerythritol triacrylate, and propoxylated trimethylolpropane triacrylate; and, (4) multi-functional monomers, such as: pentaerythritol tetraacrylate, di-trimethylol propane tetraacrylate, dipentaerythritol pentaacrylate, ethoxylated pentaerythritol tetraacrylate, and pentaacrylate ester.

Other reactive components (M) that are not considered as monomers are reactive oligomers selected typically from acrylated or methacrylated polyols. Examples include epoxy type acrylates such as Bisphenol A diglycidylether diacrylate, polyester acrylates and metharylates, urethane acrylates and methacrylates, dendrimeric acrylates and methacrylates, polyether acrylates and methacrylates, acrylated acrylics or amine-modified polyether acrylates.

The present invention is also directed to a process for treating a substrate with a coating composition, comprising the steps of:
(a) providing a radiation receptive layer, at least partially covering said substrate,
(b) treating the radiation receptive layer by electromagnetic radiation, by providing light, ranging from 400 - 3000, preferably from 700-1100 nm, wherein
the radiation receptive layer provided in step (a) contains or consists of an aqueous coating composition (T) as described above.

Typically, the process according to present invention is performed under exclusion of oxygen, preferably by purging with inert gas or by alternative methods known by the skilled person. This might be done in order to avoid the inhibition of free radical polymerization because of atmospheric oxygen.

According to a special embodiment the process according to the present invention is designed as a printing process.

Typically, the radiation receptive layer provided in step (a) has a thickness between 0.1 - 200, preferably between 0.2 µm and 20 µm, where the thickness is determined via gravimetry. In case of the application of thicker layers the irradiation effect might be not sufficient so that especially the chemical curing remains not satisfactory.

The present invention also relates to an (intermediate) industrial product which is producible by a process as described above.

Furthermore, the present invention concerns also the use of a coating composition as described above as a primer coating, wood coating or as a printing ink.

The present invention is further described below by using examples.

### Examples:

### Description of Examples 1-14 and comparative examples Comparative 1-2

### Reactivity:

39.6 mg of iodonium salt with the respective anion and 1.36 mg of Sensitizer (Sens) were dissolved in 6.7 g of water. 3.8 g of a crosslinkable polyester-polyurethane dispersion (40% in aqueous solution) comprising reactive double bonds were then added to the initiator mixture and homogenized. The reactive coating produced in this way has a non-volatile content of approximately 14.4% by weight. The concentration of the iodonium salt was chosen so that it makes up about 2.6% by weight, based on the solid resin mass. The weight amount of Sens was selected so that it presented approximately 0.09% by weight based on the solid resin composition. Furthermore, the coating described was applied to a glass substrate with a bar coater resulting in a thickness of 80 µm (wet). It was then exposed under inert gas (N₂) for 2 min with a near-infrared LED (intensity: 1 W/cm²; exposure area: 9 cm x 1.5 cm; λₘₐₓ = 820 nm) to dry and simultaneously chemically crosslink. The conversion of double bonds after exposure was determined by FTIR spectroscopy.

In addition, the reactivity of the reaction mixture could also be confirmed by differential scanning calorimetry (photo-DSC). Here, 20 µl of aforementioned solution were added in a DSC-pan, air dried and exposed with the LED described above. It exhibited an intensity of 200 mW/cm². The height of the exothermic peak in the DSC-signal (W/g) relates to the reactivity often also called as Rₚ^{max}. The higher the signal, the higher the intensity.

### Structures of sensitizers used

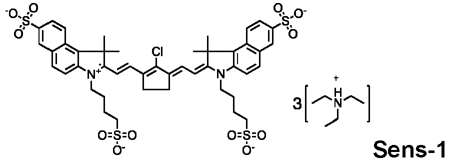

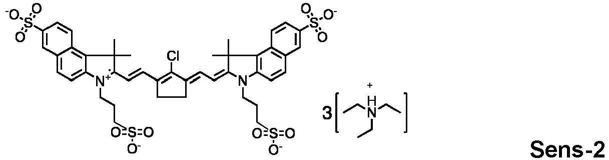

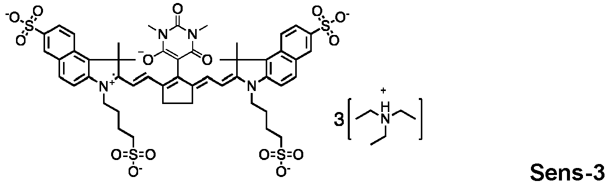

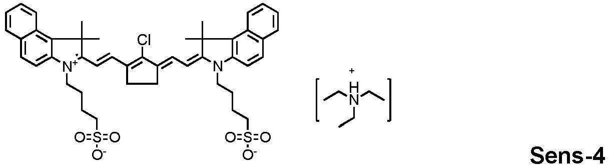

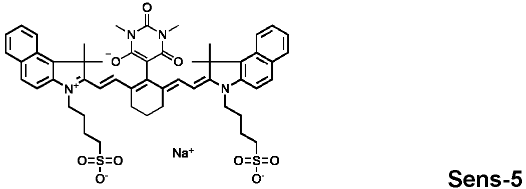

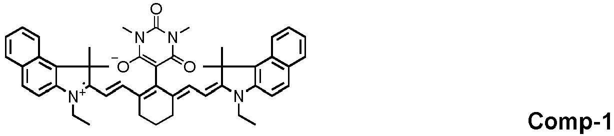

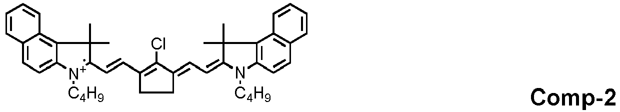

### Iodonium cations (Icat)

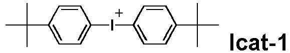

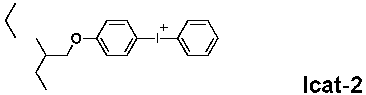

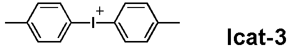

### Anions (X⁻):

a: CH₃-CH(OH)COO⁻; b: NO₃⁻; c: Cl⁻; d: PF₆⁻; e: SbF₆⁻, f: (CF₃SO₂)₂N⁻; g: Al(O-*t-*C₄F₉)₄⁻, h: (Ph)₂-C(OH)-COO⁻

### Solubility of the components:

### Iodonium salts:

The solubility of the lodonium salts was determined with GC-MS. The salt quantitatively decomposes >230°C. Sample preparation started with stepwise dissolution of the salt in the monomer (starting with 50mg salt in 500 µL monomer, the amount of iodonium salt was increased with 50mg steps until the monomer was oversaturated with the salt, which can be visually seen by the appearance of two phases). The solution was transferred in an ultrasonic bath for 10 min, and centrifuged to separate the non-dissolved iodonium salt. The liquid phase was filtered to obtain the saturated monomer solution. Subsequently, the solution obtained was diluted with methanol. This solution was transferred to the GC-MS where it was injected into the injector. The injection temperature was set at 30°C and increased after 0.05 min isothermal driving to 320°C applying a heating range of 12°C·s⁻¹. The conditions in the GC-MS were chosen so that the iodonium salt decomposited into the corresponding aryl iodide as identified in the mass spectrum. This was quantified using defined concentrations of iodonium salt, which were injected into GC-MS equipment resulting a calibration curve for each iodonium salt.

### Cyanines/NIR Absorber:

100 mg NIR-sensitizer were transferred into 1 g monomer resulting in a saturated solution in water comprising non-dissolved parts of the sensitizer. This was taken in an ultrasonic bath for 10 min, centrifuged to separate non-dissolved sensitizer. The solution obtained was finally filtrated to separate possibly available solid sensitizer stuff. 20-100 mg (depending on sensitizer dissolution) of this solution was diluted with 10 mL water. An UV-Vis-NIR spectrum was taken from this solution in a cuvette (d=10 mm) resulting in quantitative information regarding the dissolved sensitizer in the monomer using the extinction coefficient of the sensitizer in water.

### Examples 1-16

| example | **Binder (M)** | **Sens** | **Icat** | **X⁻** |
|---|---|---|---|---|
| 1 | **Aqueous Dispersion*** | **Sens-1** | **Icat-1** | **a** |
| 2 | **Aqueous Dispersion*** | **Sens-2** | **Icat-1** | **b** |
| 3 | **Aqueous Dispersion*** | **Sens-3** | **Icat-1** | **c** |
| 4 | **Aqueous Dispersion*** | **Sens-4** | **Icat-1** | **d** |
| 5 | **Aqueous Dispersion*** | **Sens-5** | **Icat-1** | **e** |
| 6 | **Aqueous Dispersion*** | **Sens-1** | **Icat-1** | **f** |
| 7 | **Aqueous Dispersion*** | **Sens-1** | **Icat-1** | **g** |
| 8 | **Aqueous Dispersion*** | **Sens-1** | **Icat-1** | **h** |
| 9 | **Aqueous Dispersion*** | **Sens-1** | **Icat-2** | **a** |
| 10 | **Aqueous Dispersion*** | **Sens-1** | **Icat-3** | **b** |
| 11 | **Aqueous Dispersion*** | **Sens-2** | **Icat-1** | **a** |
| 12 | **Aqueous Dispersion*** | **Sens-3** | **Icat-1** | **a** |
| 13 | **Aqueous Dispersion*** | **Sens-4** | **Icat-1** | **a** |
| 14 | **Aqueous Dispersion*** | **Sens-5** | **Icat-1** | **a** |
| 15 | PEGDA** aqueous solution | **Sens-5** | **Icat-1** | **a** |
| 16 | PEGDMA*** aqueous solut. | **Sens-5** | **Icat-1** | **a** |
| 17' | TPGDA**** | **Comp-1** | **Icat-1** | **a** |
| 18' | TMPTA***** | **Comp-2** | **Icat-1** | **a** |

| | | | | |
|---|---|---|---|---|
| * based on Polyester-Polyurethane copolymer containing curable acrylate moieties ** Polyethylenglycoldiacrlyate (Mₙ = 575 g/mol); 14,4 % in water ***Polyethylenglycoldimethacrylate (Mₙ = 550 g/mol); 14,4 % in water **** Tripropyleneglycolediacrylate without water (neat monomer) *****Trimethylolpropyleneglycolediacrylate without water (neat monomer) | | | | |

Examples 17 and 18 are comparative examples because there is no use of water.

### Results referring to the table above:

| example | Solubility of **Sens** (g/L) | Solubility of **Icat X⁻** (g/L) | Conversion (%) | Rₚ^{max} (W/g) |
|---|---|---|---|---|
| 1 | 41 | 57 | 88 | 3,5 |
| 2 | 42 | 1,3 | 56 | 1,4 |
| 3 | 45 | 1,7 | 1 | 0,2 |
| 4 | 22 | 0,3 | 4 | 0,5 |
| 5 | 28 | 0,4 | 6 | 0,5 |
| 6 | 41 | 0,9 | 3 | 0,3 |
| 7 | 41 | 0,1 | 7 | 0,9 |
| 8 | 41 | 0,3 | 5 | 0,7 |
| 9 | 41 | 39 | 67 | 3,2 |
| 10 | 41 | 54 | 71 | 3,9 |
| 11 | 42 | 57 | 72 | 3,3 |
| 12 | 45 | 57 | 81 | 3,2 |
| 13 | 22 | 57 | 70 | 2,8 |
| 14 | 28 | 57 | 89 | 3,9 |
| 15 | 28 | 57 | 91 | 2,3 |
| 16 | 28 | 57 | 88 | 2.1 |
| 17 | 0,3 | 57 | Not compatible according to the procedure disclosed, film formation proceeded inhomogeneous | |
| 18 | 0,1 | 57 | Not compatible according to the procedure disclosed, film formation proceeded inhomogeneous | |

The conversion (%) relates to the degree of the converted (free radically polymerizable) double bonds
Rₚ^{max} is a measure for the maximal rate of polymerization (measured by calorimetry)

The experimental results make it clear that although the reactivity/conversions are significantly dependent on the choice (solubility) of the anion X- of the iodonium salt used, conversions can generally be achieved with all of the anions used.

Without (water) solvents at all (comparative tests 17 and 18) it does not work - for this, organic solvents would have to be used as a water substitute - which, however, should be avoided for ecological/economic reasons.

## Claims

1. An aqueous coating composition (T) comprising:
i) a reactive compound (M) containing at least one free radically polymerizable double bond,
ii) a cyanin (C) and
iii) an iodonium salt (O),
wherein at least a partial quantity of the cyanin (C) and of the iodonium salt (O) were dissolved in a contained aqueous phase (A) comprising at least 40 wt.% water.

2. An aqueous coating composition according to claim 1, which is provided as an aqueous dispersion in which the aqueous phase (A) is the continuous phase which comprises dispersed particles of a non-aqueous phase (B).

3. An aqueous coating composition according to claim 1 or 2, in which the contained aqueous phase (A) comprises 40 - 98, preferably 70 - 90 wt.% water.

4. An aqueous coating composition according to one of the claims 1 - 3 in which the aqueous phase (A) contains less than 40, preferably less than 25 wt.% of such components which cannot be subsumed to one of the following components: water, a reactive compound (M), cyanin (C) and iodonium salt (O).

5. An aqueous coating composition according to one of the claims 1 - 4 in which the aqueous phase (A) contains less than 15, preferably less than 5, more preferably no (co-)solvent.

6. An aqueous coating composition according to one of the claims 1 - 5, containing 0.05 - 3.00 wt.%, preferably 0.50 - 2.00 wt.% iodonium salt (O) and 0.005 - 0.500 wt.%, preferably 0.01 - 0.50 wt.% cyanin (C).

7. An aqueous coating composition according to one of the claims 1 - 6 in which the molar proportion of (O) to (C) in the aqueous phase (A) is 5 - 70, preferably 30 - 50.

8. An aqueous coating composition according to one of the claims 1 - 7 in which at least 60 wt.-% of the species of (C) have a structure according to I, II, III and/or IV: 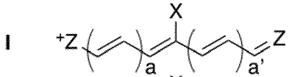 a, a' = 0, 1 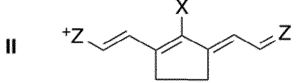 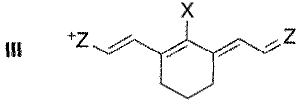 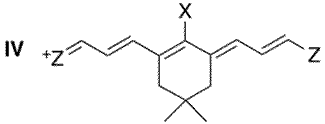 where a and a' are independently of each other 0 or 1,
⁺Z is independently represented by an organic group containing a quarternary ammonium cation,
Z is independently represented by an organic group containing a tertiary amino moiety,
X is independently represented by an organic moiety, Cl or H.

9. An aqueous coating composition according to one of the claims 1 - 8, in which at least 60 wt.-% of the cationic species of (O) are of the type alkyl and/or alkyloxy substituted diaryl iodonium.

10. An aqueous coating composition according to one of the claims 1 - 9, in which at least 60 wt.-% of the anionic species of (O) are anions derived from a carboxylic acid, preferably from a hydroxyl carboxylic acid, most preferably provided by lactate.

11. An aqueous coating composition according to one of the claims 1 - 10, in which at least 10 wt.-% of the anionic species of (O) are provided by nitrate.

12. An aqueous coating composition according to one of the claims 1 - 11, in which at least 60 wt.-% of the species of the cyanin (C) and at least 60 wt.-% of the species of the iodonium salt (O) each have a water solubility of at least 30 g/l, preferably of at least 50 g/l, at 20 °C.

13. An aqueous coating composition according to one of the claims 2 - 12, in which at least a partial quantity of the species of the reactive compound (M), preferably at least 70 wt. %, more preferably at least 90 wt.%, are contained in the non-aqueous phase (B).

14. An aqueous coating composition according to one of the claims 1 - 13, in which at least a partial quantity of the species of the reactive compound (M), preferably at least 60 wt.%, contain at least two free radically polymerizable double bonds.

15. An aqueous coating composition according to one of the claims 1 - 14, in which at least a partial quantity of the species of the reactive compound (M), preferably at least 60 wt.%, contain at least one (meth)acryloyl group, preferably at least one acryloyl group.

16. An aqueous coating composition according to one of the claims 1 - 15, in which the weigth proportion of (M) to (C) is 10000 - 10, preferably 1500 - 500.

17. An aqueous coating composition according to one of the claims 1 - 16 which is curable by near-infrared light electromagnetic radiation.

18. A process for treating a substrate with a coating composition, comprising the steps of:
(a) providing a radiation receptive layer, at least partially covering said substrate,
(b) treating the radiation receptive layer by electromagnetic radiation,
by providing light, ranging from 400-3000, preferably from 700-1100 nm, wherein
the radiation receptive layer provided in step (a) contains or consists of an aqueous coating composition (T) according to one of the claims 1 - 16.

19. A process according to claim 18, which is performed under exclusion of oxygen, preferably by purging with inert gas.

20. A process according to one of the claims 18 or 19, which is designed as a printing process.

21. A process according to one of the claims 18 - 20, wherein the radiation receptive layer provided in step (a) has a thickness between 0.1 µm and 200 µm, where the thickness is determined via gravimetry.

22. Use of a coating composition according to one of the claims 1 - 17 as a primer coating, wood coating or as a printing ink.

## Patentansprüche

1. Wässrige Beschichtungszusammensetzung (T), umfassend:
i) eine reaktive Verbindung (M) mit mindestens einer radikalisch polymerisierbaren Doppelbindung,
ii) ein Cyanin (C) und
iii) ein Iodoniumsalz (O),
wobei mindestens eine Teilmenge des Cyanins (C) und des Iodoniumsalzes (O) in einer enthaltenen wässrigen Phase (A), die mindestens 40 Gew.-% Wasser umfasst, gelöst sind.

2. Wässrige Beschichtungszusammensetzung nach Anspruch 1, die als wässrige Dispersion bereitgestellt wird, in der die wässrige Phase (A) die kontinuierliche Phase ist, die dispergierte Partikel einer nichtwässrigen Phase (B) umfasst.

3. Wässrige Beschichtungszusammensetzung nach Anspruch 1 oder 2, wobei die enthaltene wässrige Phase (A) 40 - 98 Gew-%, vorzugsweise 70 - 90 Gew.-%, Wasser umfasst.

4. Wässrige Beschichtungszusammensetzung nach einem der Ansprüche 1 - 3, wobei die wässrige Phase (A) weniger als 40 Gew.-%, vorzugsweise weniger als 25 Gew.-%, solcher Komponenten enthält, die nicht unter eine der folgenden Komponenten fallen: Wasser, eine reaktive Verbindung (M), Cyanin (C) und Iodoniumsalz (O).

5. Wässrige Beschichtungszusammensetzung nach einem der Ansprüche 1 - 4, wobei die wässrige Phase (A) weniger als 15, bevorzugt weniger als 5, besonders bevorzugt kein, (Co-)Lösungsmittel enthält.

6. Wässrige Beschichtungszusammensetzung nach einem der Ansprüche 1 - 5, enthaltend 0,05 - 3,00 Gew.-%, vorzugsweise 0,50 - 2,00 Gew.-% Iodoniumsalz (O) und 0,005 - 0,500 Gew.-%, vorzugsweise 0,01 - 0,50 Gew.-%, Cyanin (C).

7. Wässrige Beschichtungszusammensetzung nach einem der Ansprüche 1 - 6, wobei das molare Verhältnis von (O) zu (C) in der wässrigen Phase (A) 5 - 70, vorzugsweise 30 - 50 beträgt.

8. Wässrige Beschichtungszusammensetzung nach einem der Ansprüche 1 - 7, wobei mindestens 60 Gew.-% der Spezies von (C) eine Struktur gemäß I, II, III und/oder IV aufweisen: 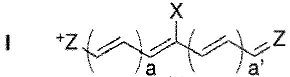 a, a' = 0, 1 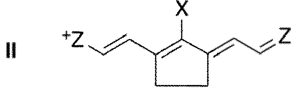 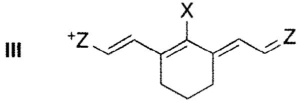 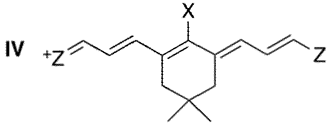
wobei a und a' unabhängig voneinander für 0 oder 1 stehen, ⁺Z unabhängig durch eine organische Gruppe, die ein quartäres Ammoniumkation enthält, wiedergegeben wird,
Z unabhängig durch eine organische Gruppe, die eine tertiäre Aminogruppierung enthält, wiedergegeben wird,
X unabhängig durch eine organische Gruppierung, Cl oder H wiedergegeben wird.

9. Wässrige Beschichtungszusammensetzung nach einem der Ansprüche 1 - 8, wobei mindestens 60 Gew.-% der kationischen Spezies von (O) vom Typ alkyl- und/oder alkyloxysubstituiertes Diaryliodonium sind.

10. Wässrige Beschichtungszusammensetzung nach einem der Ansprüche 1 - 9, wobei mindestens 60 Gew.-% der anionischen Spezies von (O) Anionen sind, die sich von einer Carbonsäure, vorzugsweise von einer Hydroxylcarbonsäure, ableiten, und ganz besonders bevorzugt durch Lactat bereitgestellt werden.

11. Wässrige Beschichtungszusammensetzung nach einem der Ansprüche 1 - 10, wobei mindestens 10 Gew.-% der anionischen Spezies von (O) durch Nitrat bereitgestellt werden.

12. Wässrige Beschichtungszusammensetzung nach einem der Ansprüche 1 - 11, wobei mindestens 60 Gew.-% der Spezies des Cyanins (C) und mindestens 60 Gew.-% der Spezies des Iodoniumsalzes (O) jeweils eine Wasserlöslichkeit von mindestens 30 g/l, vorzugsweise von mindestens 50 g/l, bei 20 °C aufweisen.

13. Wässrige Beschichtungszusammensetzung nach einem der Ansprüche 2 - 12, wobei mindestens eine Teilmenge der Spezies der reaktiven Verbindung (M), vorzugsweise mindestens 70 Gew.-%, weiter bevorzugt mindestens 90 Gew.-%, in der nichtwässrigen Phase (B) enthalten sind.

14. Wässrige Beschichtungszusammensetzung nach einem der Ansprüche 1 - 13, wobei mindestens eine Teilmenge der Spezies der reaktiven Verbindung (M), vorzugsweise mindestens 60 Gew.-%, mindestens zwei radikalisch polymerisierbare Doppelbindungen enthält.

15. Wässrige Beschichtungszusammensetzung nach einem der Ansprüche 1 - 14, bei der mindestens eine Teilmenge der Spezies der reaktiven Verbindung (M), vorzugsweise mindestens 60 Gew.-%, mindestens eine (Meth)acryloylgruppe, vorzugsweise mindestens eine Acryloylgruppe, enthält.

16. Wässrige Beschichtungsmittel nach einem der Ansprüche 1 - 15, wobei der Gewichtsanteil von (M) zu (C) 10.000 - 10, vorzugsweise 1500 - 500, beträgt.

17. Wässrige Beschichtungszusammensetzung nach einem der Ansprüche 1 - 16, die durch elektromagnetische Nahinfrarotlichstrahlung härtbar ist.

18. Verfahren zum Behandeln eines Substrats mit einer Beschichtungszusammensetzung, umfassend die Schritte:
(a) Bereitstellen einer strahlungsaufnehmenden Schicht, die das Substrat zumindest teilweise bedeckt,
(b) Behandeln der strahlungsaufnehmenden Schicht mit elektromagnetischer Strahlung durch Bereitstellen von Licht im Bereich von 400-3000 nm, vorzugsweise von 700-1100 nm, wobei
die in Schritt (a) bereitgestellte strahlungsaufnehmende Schicht eine wässrige Beschichtungszusammensetzung (T) nach einem der Ansprüche 1 - 16 enthält oder daraus besteht.

19. Verfahren nach Anspruch 18, das unter Ausschluss von Sauerstoff, vorzugsweise durch Spülen mit Inertgas, durchgeführt wird.

20. Verfahren nach einem der Ansprüche 18 oder 19, das als Druckverfahren ausgestaltet ist.

21. Verfahren nach einem der Ansprüche 18 - 20, wobei die in Schritt (a) bereitgestellte strahlungsaufnehmende Schicht eine Dicke zwischen 0,1 µm und 200 µm aufweist, wobei die Dicke durch Gravimetrie bestimmt wird.

22. Verwendung einer Beschichtungszusammensetzung nach einem der Ansprüche 1 - 17 als Grundierung, Holzbeschichtung oder als Druckfarbe.

## Revendications

1. Composition aqueuse de revêtement (T) comprenant :
i) un composé réactif (M) contenant au moins une double liaison polymérisable par des radicaux libres,
ii) une cyanine (C) et
iii) un sel d'iodonium (O),
dans laquelle au moins une quantité partielle de la cyanine (C) et du sel d'iodonium (O) ont été dissoutes dans une phase aqueuse contenue (A) comprenant au moins 40 % en poids d'eau.

2. Composition aqueuse de revêtement selon la revendication 1, qui est fournie sous la forme d'une dispersion aqueuse dans laquelle la phase aqueuse (A) est la phase continue qui comprend des particules dispersées d'une phase non aqueuse (B).

3. Composition aqueuse de revêtement selon la revendication 1 ou 2, dans laquelle la phase aqueuse contenue (A) comprend 40 à 98, de préférence 70 à 90 % en poids d'eau.

4. Composition aqueuse de revêtement selon l'une quelconque des revendications 1 à 3, dans laquelle la phase aqueuse (A) contient moins de 40, de préférence moins de 25 % en poids de tels composants qui ne peuvent être intégrés à l'un des composants suivants : eau, un composé réactif (M), cyanine (C) et sel d'iodonium (O).

5. Composition aqueuse de revêtement selon l'une quelconque des revendications 1 à 4, dans laquelle la phase aqueuse (A) contient moins de 15, de préférence moins de 5, plus préférablement pas de (co)solvant.

6. Composition aqueuse de revêtement selon l'une quelconque des revendications 1 à 5, contenant 0,05 à 3,00 % en poids, de préférence 0,50 à 2,00 % en poids de sel d'iodonium (O) et 0,005 à 0,500 % en poids, de préférence 0,01 à 0,50 % en poids de cyanine (C).

7. Composition aqueuse de revêtement selon l'une quelconque des revendications 1 à 6, dans laquelle la proportion molaire de (O) à (C) dans la phase aqueuse (A) est de 5 à 70, de préférence de 30 à 50.

8. Composition aqueuse de revêtement selon l'une quelconque des revendications 1 à 7, dans laquelle au moins 60 % en poids des espèces de (C) ont une structure selon I, II, III et/ou IV : 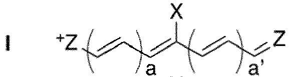 a, a' = 0, 1 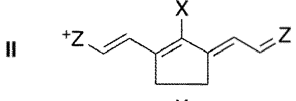 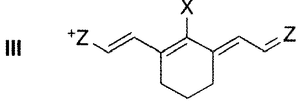 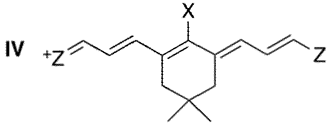
où a et a' sont, indépendamment l'un de l'autre, 0 ou 1, ⁺Z est représenté indépendamment par un groupe organique contenant un cation ammonium quaternaire,
Z est représenté indépendamment par un groupe organique contenant un groupement amine tertiaire,
X est représenté indépendamment par un groupement organique, Cl ou H.

9. Composition aqueuse de revêtement selon l'une quelconque des revendications 1 à 8, dans laquelle au moins 60 % en poids des espèces cationiques de (O) sont du type diaryliodonium substitué par alkyle et/ou alkyloxy.

10. Composition aqueuse de revêtement selon l'une quelconque des revendications 1 à 9, dans laquelle au moins 60 % en poids des espèces anioniques de (O) sont des anions dérivés d'un acide carboxylique, de préférence d'un acide hydroxycarboxylique, plus préférablement fournis par lactate.

11. Composition aqueuse de revêtement selon l'une quelconque des revendications 1 à 10, dans laquelle au moins 10 % en poids des espèces anioniques de (O) sont fournies par nitrate.

12. Composition aqueuse de revêtement selon l'une quelconque des revendications 1 à 11, dans laquelle au moins 60 % en poids des espèces de la cyanine (C) et au moins 60 % en poids des espèces du sel d'iodonium (O) ont chacun une solubilité dans l'eau d'au moins 30 g/l, de préférence d'au moins 50 g/l, à 20 °C.

13. Composition aqueuse de revêtement selon l'une quelconque des revendications 2 à 12, dans laquelle au moins une quantité partielle des espèces du composé réactif (M), de préférence au moins 70 % en poids, plus préférablement au moins 90 % en poids, sont contenus dans la phase non aqueuse (B).

14. Composition aqueuse de revêtement selon l'une quelconque des revendications 1 à 13, dans laquelle au moins une quantité partielle des espèces du composé réactif (M), de préférence au moins 60 % en poids, contiennent au moins deux doubles liaisons polymérisables par des radicaux libres.

15. Composition aqueuse de revêtement selon l'une quelconque des revendications 1 à 14, dans laquelle au moins une quantité partielle des espèces du composé réactif (M), de préférence au moins 60 % en poids, contient au moins un groupe (méth)acryloyle, de préférence au moins un groupe acryloyle.

16. Composition aqueuse de revêtement selon l'une quelconque des revendications 1 à 15, dans laquelle la proportion pondérale de (M) par rapport à (C) est de 10 000 pour 10, de préférence 1 500 pour 500.

17. Composition aqueuse de revêtement selon l'une quelconque des revendications 1 à 16, qui est durcissable par rayonnement électromagnétique de lumière proche infrarouge.

18. Procédé de traitement d'un substrat par une composition de revêtement, comprenant les étapes de :
(a) fourniture d'une couche réceptrice du rayonnement, recouvrant au moins partiellement ledit substrat,
(b) traitement de la couche réceptrice de rayonnement par rayonnement électromagnétique, par apport de lumière, comprise entre 400 et 3 000, de préférence 700 et 1 100 nm, dans lequel
la couche réceptrice de rayonnement fournie à l'étape (a) contient ou est constituée par une composition aqueuse de revêtement (T) selon l'une quelconque des revendications 1 à 16.

19. Procédé selon la revendication 18, qui est réalisé sous exclusion de l'oxygène, de préférence par purge avec un gaz inerte.

20. Procédé selon l'une quelconque des revendications 18 ou 19, qui est conçu comme un procédé d'impression.

21. Procédé selon l'une quelconque des revendications 18 à 20, dans lequel la couche réceptrice de rayonnement fournie à l'étape (a) a une épaisseur comprise entre 0,1 µm et 200 µm, où l'épaisseur est déterminée par gravimétrie.

22. Utilisation d'une composition de revêtement selon l'une quelconque des revendications 1 à 17 comme revêtement d'apprêt, revêtement de bois ou comme encre d'impression.
